# EUROPÄISCHE PATENTSCHRIFT

(11) **EP 2 168 222 B1**
(45) Veröffentlichungstag und Bekanntmachung des Hinweises auf die Patenterteilung: **24.06.2015**
(21) Anmeldenummer: 07821565.4
(22) Anmeldetag: 19.10.2007
(51) Int. Cl.: B60L 3/00, H02J 7/00

(54) **VERPOLSCHUTZEINRICHTUNG FÜR BORDNETZE VON KRAFTFAHRZEUGEN**
POLARITY REVERSAL PROTECTION UNIT FOR VEHICLE ELECTRIC SYSTEMS OF MOTOR VEHICLES
DISPOSITIF DE PROTECTION CONTRE L'INVERSION DE POLARITÉ POUR RÉSEAUX DE BORD DE VÉHICULES AUTOMOBILES

(30) Priorität: 13.07.2007 DE 102007033103
(43) Veröffentlichungstag der Anmeldung: 31.03.2010
(73) Patentinhaber: Auto-Kabel Management GmbH, 79688 Hausen i.W. (DE)
(72) Erfinder: GRONWALD, Frank, 50181 Bedburg (DE)
(74) Vertreter: Cohausz & Florack
(86) Internationale Anmeldenummer: PCT/EP2007/061201
(87) Internationale Veröffentlichungsnummer: WO 2009/010105

(56) Entgegenhaltungen:
- EP-A- 1 148 610
- WO-A-2005/011079
- DE-A1- 10 118 051

## Beschreibung

Die Anmeldung betrifft im Allgemeinen eine Verpolschutzeinrichtung für Kraftfahrzeuge mit einer Detektoreinrichtung, einem ersten mit einem Versorgungsstützpunkt elektrisch verbundenem Anschlusselement, einem zweiten elektrisch auf dem Potential der Fahrzeugkarosserie liegenden Anschlusselement, wobei im Falle einer Verpolung das erste Anschlusselement mit dem zweiten Anschlusselement über die Detektoreinrichtung elektrisch verbunden ist. Die Anmeldung betrifft darüber hinaus einen Versorgungsstützpunkt mit einer solchen Verpolschutzeinrichtung sowie ein Verfahren zum Schützen eines Bordnetzes vor einer Verpolung.

Bordnetze von Kraftfahrzeugen werden in der heutigen Zeit immer unfangreicher und umfassen eine Vielzahl an unterschiedlichen Verbrauchern. Die Verbraucher werden im Allgemeinen von einer Fahrzeugbatterie mit Energie versorgt. Viele dieser Verbraucher sind gegenüber einer Verpolung empfindlich. Beispiele hierfür sind Halbleiterschalter oder auch Elektrolytkondensatoren, die bei einer falschen Polung einer angeschlossenen Versorgungsbatterie beschädigt bzw. zerstört werden können. Insbesondere bei Elektrolytkondensatoren kann es aufgrund einer nicht korrekt gepolten Spannung zu erheblichen Schäden kommen, da Elektrolytkondensatoren explodieren können und in Folge der Explosion weitere Bauelemente in ihrer Nähe beschädigt werden. Auch können jegliche Transistorschaltungen leicht durch eine Verpolung zerstört werden.

Ferner kann es in Folge von Überspannungen zu Beschädigungen von Verbraucher eines Bordnetzes kommen. Für einige Verbraucher gibt es bestimmte maximal zulässige Spannungsgrenzen. Bei höheren Spannungswerten können die Verbraucher zerstört werden.

Zu einer Verpolung kann es insbesondere bei einem Fremdstart kommen. Wenn an einen Fremdstartstützpunkt der falsche Pol der Fremdbatterie oder eine Fremdbatterie mit einer zu hohen Spannung, beispielsweise bei einem Fremdstart eines PKWs durch einen LKW, angeschlossen wird, kann es zu erheblichen Beschädigungen des Bordnetzes kommen. Die Folgen sind ein Ausfall des Fahrzeugs und hohe Reparaturkosten.

Zum Schutz gegen Verpolung können zentrale Verpolschutzschaltungen eingesetzt werden. Diese Verpolschutzschaltungen sind aus dem Stand der Technik bekannt. Die DE 101 11 25 A1 offenbart beispielsweise eine Verpolschutzschaltung, die ein pyrotechnisches Trennelement aufweist. Im Falle einer Verpolung wird das pyrotechnische Trennelement gezündet und das Bordnetz von der Batterie getrennt. Nachteilig bei dieser Verpolschutzschaltung ist jedoch, dass verschiedene Bauteile, wie beispielsweise das Trennelement oder die Detektoreinrichtung, zerstört werden.

Aus der WO 2005/011079 ist eine Anordnung zum Schutz einer elektrischen Einrichtung bekannt. Die darin beschriebene Einrichtung ist an einem Pol einer Batterie angeschlossen und weist eine Auswertungsschaltung auf, die ein Schalter öffnet, sobald sie einen Fehlstrom feststellt. Durch die darin beschriebene Vorrichtung wird unmittelbar an einer Polklemme zwischen einem mit der Polklemme verbundenen Anschlussabschnitt und einem zum Starthilfegeben und Starthilfenehmen mit einem Starthilfekabel kontaktierbaren Starthilfe-Kontaktabschnitt ein Schalter angeordnet. Der Schalter kann die elektrische Verbindung zwischen Starthilfe-Kontaktabschnitt und Anschlussabschnitt trennen, sobald eine Auswerteschaltung einen Fehlstrom detektiert.

Die beschriebene Anordnung weist eine Diode auf, die im Verpolfall leitet und ansonsten sperrt. Problematisch ist bei dieser Vorrichtung jedoch, dass die Verlustwärme, die in der Diode im Verpolfall entsteht, nicht ausreichend abgeleitet werden kann, so dass es zu einer Zerstörung der Diode kommen kann.

Offenlegungsschrift DE 100 19 588 A1 ist eine Fremdstarteinrichtung bekannt, bei der mit Hilfe der im Generator vorhandenen Dioden der durch die Verpolung auftretende Strom abgeleitet wird. Somit wird eine Zerstörung von Bauelemente des Bordnetzes und der Verpolschutzeinrichtung vermieden.

Die Dioden des Generators sind jedoch im Allgemeinen nicht für hohe Ströme ausgelegt, insbesondere nicht für einen hohen Dauerstrom. Ein solcher Strom erzeugt eine erhebliche thermische Wärme in den Dioden. Diese thermische Wärme kann bei einem Dauerstrom in der Diodenschaltung des Generators nicht ausreichend schnell abgeleitet werden. Dies kann zu einer Zerstörung der Dioden führen, der Strompfad wird unterbrochen und das Bordnetz ist nicht mehr geschützt. Darüber hinaus ist es wünschenswert, Dioden kleinerer Dimensionierung im Generator verwenden zu können.

Ferner kommen in Hybridfahrzeugen zumindest zwei unterschiedliche Batterien zum Einsatz, wobei eine Hochvoltbatterie hohe Spannungen (z.B. über 100 V bis 1 kV) für den Elektroantrieb liefert, während eine Niedervoltbatterie das Bordnetz mit einer geringeren Spannung (z.B. 12 V, 24 V, 48 V) versorgt. Im Allgemeinen ist der Generator zwischen Verbrennungsmotor und Hochvoltbatterie angeordnet und kann diese laden. Die Bordnetz-Batterie ist über einen Wechselrichter und einen Gleichspannungswandler mit dem Generator verbunden. Der Fremdstartstützpunkt ist jedoch direkt mit der Bordnetz-Batterie verbunden. Infolgedessen steht die Gleichrichterschaltung des Generators bei Hybridfahrzeugen für einen Verpolschutz nicht mehr zur Verfügung.

Daher liegt der Anmeldung die technische Aufgabe zugrunde, eine Verpolschutzeinrichtung zum Schutz von Verbrauchern zur Verfügung zu stellen, die einen hohen Schutz der Verbraucher im Falle einer Verpolung gewährleistet, und gleichzeitig eine aufwendige und kostenintensive Herstellung verhindert, sowie eine Reparatur erübrigt.

Diese und weitere Aufgaben werden anmeldungsgemäß gelöst durch eine Verpolschutzeinrichtung für Kraftfahrzeuge gemäß Anspruch 1 und ein Verfahren gemäß Anspruch 22. Diese Verpolschutzeinrichtung umfasst eine Detektoreinrichtung, ein erstes mit einem Versorgungsstützpunkt elektrisch verbundenes Anschlusselement, und ein zweites elektrisch auf dem Potential der Fahrzeugkarosserie liegendes Anschlusselement. Im Falle einer Verpolung ist das erste Anschlusselement mit dem zweiten Anschlusselement über die Detektoreinrichtung elektrisch verbunden. Ferner ist eine Isolationsschicht zwischen dem ersten und dem zweiten Anschlusselement angeordnet. Darüber hinaus weisen die Anschlusselemente jeweils zumindest eine Aufnahme auf. Dabei ist die Detektoreinrichtung zumindest formschlüssig in zumindest einer Aufnahme angeordnet.

Im Allgemeinen ist der negative Pol einer Fahrzeugbatterie mit der Fahrzeugkarosserie verbunden. Das Bordnetz ist zwischen dem positiven Potential der Batterie und dem Potential der Fahrzeugkarosserie angeordnet. Ferner kann ein Generator an der Batterie angeschlossen sein, wodurch eine Ladung der Batterie im Fahrbetrieb ermöglicht wird. Bei einem Hybridfahrzeug ist ein Generator jedoch nicht direkt mit der Bordnetz-Batterie verbunden. Zudem findet sich im Motorraum im Allgemeinen ein mit dem positiven Pol der Batterie verbundener, leicht zugänglicher Versorgungsstützpunkt für einen Fremdstart oder eine Fremdladung.

Die Verpolschutzeinrichtung kann zwischen dem Versorgungsstützpunkt, beispielsweise einem Fremdstartstützpunkt und der Fahrzeugkarosserie angeordnet sein. Die Verpolschutzeinrichtung kann beispielsweise direkt an die Fahrzeugkarosserie angeschlossen sein oder auch über ein Leitungskabel mit der Fahrzeugkarosserie verbunden sein. Auch kann die Verpolschutzeinrichtung als Teil der Batterieklemme gebildet sein. Sie kann somit in oder an der Polnische der Batterieklemme angeordnet sein.

In der Verpolschutzeinrichtung wird ein direkter elektrischer Kontakt der beiden Anschlusselemente durch eine zwischen den Anschlusselementen angeordnete Isolationsschicht verhindert. Beispielsweise kann eine Isolationsfolie vorgegeben sein. Diese kann an eines der Anschlusselemente angeklebt werden. Eine elektrische Verbindung zwischen den Anschlusselementen ist über die Detektoreinrichtung gegeben, wobei bei einer korrekten Polung der Strompfad über die Detektoreinrichtung gesperrt ist.

Im Falle einer Verpolung hingegen, wenn ein falscher Pol oder eine zu hohe Spannung am Versorgungsstützpunkt angeschlossen ist, fließt ein Strom vom ersten Anschlusselement über die Detektoreinrichtung zum zweiten Anschlusselement. Ein Strompfad über die Verpolschutzeinrichtung ist hergestellt. Die Detektoreinrichtung schließt in diesem Fall den Versorgungsstützpunkt mit dem negativen Potential der Batterie kurz. Am Bordnetz liegt somit keine oder nur eine geringe Spannung (z.B. < 1 V) an und eine Zerstörung des Bordnetzes wird vermieden.

Dieser Strompfad muss hinreichend lange existent sein, um einen sicheren Verpolschutz zu gewährleisten. Ein Strom durch die Detektoreinrichtung erzeugt jedoch eine hohe thermische Wärme, die zu einer Zerstörung der Verpolschutzeinrichtung innerhalb sehr kurzer Zeit, zum Beispiel weniger als eine Sekunde, insbesondere der Detektoreinrichtung, führen kann. Es ist erkannt worden, dass eine schnelle Ableitung der Wärme eine thermische Zerstörung der Detektoreinrichtung ausreichend lange verhindert. Ferner ist erkannt worden, dass eine schnelle Ableitung der Wärme erreicht wird, wenn die beiden Anschlusselemente zumindest eine Aufnahme zur Aufnahme der Detektoreinrichtung aufweisen. Darüber hinaus wird durch eine zumindest formschlüssige Anordnung der Detektoreinrichtung in zumindest einer Aufnahme eine sehr gute Wärmeableitung von der Detektoreinrichtung über die Anschlusselemente nach Außen erzielt. Beispielsweise ist die Detektoreinrichtung zumindest formschlüssig in den Aufnahmen beider Anschlusselemente angeordnet.

Gemäß der anmeldungsgemäßen Verpolschutzeinrichtung ist ein pyrotechnischer Schalter nicht erforderlich. Damit entfallen hohe Kosten in Folge einer Reparatur des pyrotechnischen Schalters und etwaiger weiterer durch eine Verpolung zerstörter Bauelemente. Gleichwohl wird ein mehr als ausreichender Schutz der Verbraucher des Bordnetzes bei gleichzeitig geringen Herstellungskosten und einem einfachen Einbau der Verpolschutzeinrichtung gewährleistet.

Zumindest ein Anschlusselement kann gemäß eines Ausführungsbeispiels aus einem Stoff mit einer hohen Wärmeleitfähigkeit hergestellt sein. Stoffe mit einer hohen Wärmeleitfähigkeit können die Wärme besonders gut ableiten. Insbesondere Metalle, beispielsweise Kupfer oder Silber, weisen eine hohe Wärmeleitfähigkeit auf. Vorteilhafterweise weist zumindest ein Anschlusselement eine Wärmeleitfähigkeit von zumindest 235 W/(m*K) auf, vorzugsweise über 400 W/(m*K). Als Anschlusselemente können zum Beispiel Kupferplatten verwendet werden, wobei beide Platten vorzugsweise eine äquivalente oder identische Form aufweisen.

Darüber hinaus hängt die Wärmeleitfähigkeit unter anderem von der Größe der Verbindungsfläche der Detektoreinrichtung mit den Anschlusselementen ab. Die Anschlusselemente können als Aufnahme zumindest eine Öffnung, beispielsweise mit einem Durchmesser von 12.5 mm und einer Tiefe von 4 mm, aufweisen. Damit einher gehen große Seitenflächen der Öffnungen für eine gute thermische Ableitung aufgrund der zumindest formschlüssigen Verbindung. Das erste Anschlusselement kann zudem dicker als das zweite Anschlusselement sein, um einer in diesem Element auftretenden größeren thermischen Erwärmung Rechnung zu tragen.

Weiterhin kann die Detektoreinrichtung derart gebildet sein, dass sie zumindest für 2 Sekunden einen Strom von zumindest 650 A trägt. Dieser Grenzwert hat sich in Folge von Tests als ausreichend für einen sicheren Schutz der Verbraucher erwiesen. Jedoch können Anforderungen, bei denen ein Strom von über 650 A für mehr als 2,5 Sekunden fließt, durch eine andere Dimensionierung der Verpolschutzeinrichtung sicher erfüllt werden.

Gemäß eines Ausführungsbeispiels umfasst die Detektoreinrichtung zumindest eine Diode. Der Einsatz von anderen Halbleiterbauelementen, beispielsweise von Transistoren, wäre auch möglich. Dioden können in Sperr- und in Durchlassrichtung betrieben werden. Ein Stromfluss ist nur möglich, wenn an der Anode der Diode ein relativ zum Potential der Kathode positives Potential anliegt. Im normalen Fahr- oder Ladebetrieb des Fahrzeugs ist die Kathode mit dem positiven Pol der Fahrzeugbatterie verbunden, während die Anode auf dem Potential der Fahrzeugkarosserie liegt. Infolgedessen ist der Strompfad über die Verpolschutzeinrichtung gesperrt. Im Falle einer Verpolung hingegen liegt an der Kathode ein negatives Potential gegenüber dem Anodenpotential an. Die Diode wird leitend und der durch die Verpolung eingekoppelten Strom kann unmittelbar über die Verpolschutzeinrichtung fließen. Ein sicherer Schutz der Verbraucher wird erzielt, da der Spannungsabfall an der Diode in Durchflussrichtung im Allgemeinen bei 0,6 bis 0,8 V liegt. Dieses Potential ist für das Bordnetz unschädlich.

Für den Fall, dass mehr als eine Diode als Detektoreinrichtung eingesetzt werden, also zumindest zwei, können die Dioden parallel zueinander geschaltet werden. Ein Strom wird auf die dann zumindest zwei Dioden aufgeteilt. Eine geringe Strombelastung einer einzelnen Diode ist die Folge.

Gemäß eines Ausführungsbeispiels werden drei Dioden in der Detektoreinrichtung eingesetzt. Tests haben gezeigt, dass eine hinreichende Sicherheit der Verbraucher bei einem Einsatz von drei Dioden gewährleistet wird.

Jedoch können in der Verpolschutzeinrichtung auch mehr oder weniger Dioden vorgesehen werden. Einem Ausführungsbeispiel zur Folge weist die Verpolschutzeinrichtung sechs Dioden auf. Dadurch können die Dioden kleiner dimensioniert werden oder es können höhere Ströme, beziehungsweise längere Zeitspannen für einen zugelassenen Stromfluss, gewährleistet werden.

Gemäß eines weiteren Ausführungsbeispiels wird als Diode eine Leistungszenerdioden eingesetzt.
Leistungszenerdioden besitzen den Vorteil, dass sie nicht nur einen sicheren Schutz gegenüber einer Vertauschung der Pole, sondern gleichzeitig einen sicheren Schutz vor zu hohen anliegenden Spannungen gewährleisten. Ab einer bestimmten Spannung, der so genannten Durchbruchspannung, wird eine Zenerdiode auch in Sperrrichtung leitend. Beispielsweise können Leistungszenerdioden mit einer Durchbruchsspannung von größer oder gleich 28 V verwendet werden. Insbesondere wäre hierdurch ein Schutz gegenüber einer zu hohen Spannung in Folge einer angeschlossenen LKW-Batterie, die eine Spannung von 24 V aufweisen kann, gegeben. Die Durchbruchspannung kann sich zudem nach der Empfindlichkeit der im Bordnetz installierten Verbraucher gegenüber Überspannungen richten.

Die Detektoreinrichtung kann ein Sockelelement, ein Mittelelement und ein Kopfelement aufweisen. Nur ein Sockelelement und ein Kopfelement sind auch möglich. Jedes der drei bzw. zwei Elemente kann die Form eines Zylinders haben. Ebenso können die Elemente quaderförmig, kegelförmig oder anders geformt sein. Darüber hinaus kann das Mittelelement einen schmaleren Durchmesser als das Sockelelement aufweisen und über diesem angeordnet sein. Das Kopfelement wiederum kann mit einem schmaleren Durchmesser über dem Mittelelement herausragen. Die Detektoreinrichtung, beispielsweise eine Leistungszenerdiode, kann daher zylinderförmig mit einem Rücksprung geformt sein.

Das Sockelelement kann aus einem elektrisch leitenden Material, insbesondere aus einem Material mit einer hohen Wärmeleitfähigkeit von zumindest 235 W/(m*K) hergestellt sein. Vorzugsweise kann das Sockelelement aus Kupfer sein. Dies gewährleistet neben einer geringen Eigenerwärmung eine gute Ableitung der durch die Dioden erzeugten Wärme an das Anschlusselement, so dass ein sicherer Schutz der Verbraucher gegeben ist.

Weiterhin kann das Sockelelement gemäß der Anmeldung eine Aufnahme aufweisen. Die Aufnahme kann die Form eines Topfes haben.

In einem weiteren Ausführungsbeispiel ist ein Halbleiterelement in der Aufnahme angeordnet. Das Halbleiterelement, beispielsweise ein Element aus Silizium, kann dabei direkt an dem Sockelelement, vorzugsweise am Boden der Aufnahme, angeordnet sein. Andere Halbleiterelemente sind ebenso wie eine Anordnung an einem anderen Ort der Aufnahme möglich. Das Halbleiterelement weist zumindest eine Halbleitersperrschicht auf. Die direkte Anordnung des Halbleiterelements an dem eine hohe Leitfähigkeit aufweisenden Sockelelement führt zu einer optimalen Wärmeableitung der durch den Stromfluss im Halbleiterelement erzeugten Wärme.

Aus dem gleichen Grund kann das ebenfalls aus elektrisch leitendem und eine gute thermische Leitfähigkeit aufweisendem Material hergestellte Kopfelement der Detektoreinrichtung direkt an dem Halbleiterelement angebracht sein. Auch dieses Kopfelement kann aus Kupfer sein. Das Kopfelement weist hierbei einen schmaleren Durchmesser als die Aufnahme des Sockelelements auf. Ein direkter elektrischer Kontakt zwischen Kopf- und Sockelelement ist durch den Ringraum nicht möglich. Der Ringraum kann isoliert sein.

Um eine sichere Isolation zwischen Sockel- und Kopfelement zu gewährleisten, kann ein Mittelelement angeordnet werden. Das Mittelelement kann aus einem elektrisch nicht leitenden Material gebildet sein. Auch dieses Element kann jedoch vorteilhafterweise eine hohe thermische Leitfähigkeit aufweisen. Beispielsweise durch Einspritzung kann es in den Ringraum gefüllt werden. Ferner kann das Mittelelement einen Kragen aufweisen, der über den Rand der Aufnahme des Sockelelements ragt. Jedoch kann ein solcher Kragen auch entfallen.

Gemäß eines weiteren Ausführungsbeispiels weist das erste Anschlusselement zumindest eine Öffnung zur Aufnahme des Sockelelements der Detektoreinrichtung auf. Die Form der Öffnung korrespondiert zu der Form des Sockelelements. Die Form kann beispielsweise kreisförmig sein. Die Öffnung lässt sich mit einem geringen Aufwand passgenau herstellen, beispielsweise durch Stanzen, Fräse oder Bohren. Beim Stanzen kann beispielsweise das gesamte Anschlusselement, einschließlich der Öffnungen und seines Formfaktors in einem Arbeitsschritt hergestellt werden. Die Tiefe des Anschlusselements kann der Höhe des Sockelelements entsprechen. Wenn als Detektoreinrichtung beispielsweise mehr als eine Diode verwendet wird, weist das Anschlusselement hierzu korrespondierende Öffnungen auf.

Die Detektoreinrichtung kann in der Aufnahme form - und/oder kraftschlüssig angeordnet sein. Beispielsweise kann die Detektoreinrichtung in die Aufnahme eingepresst sein. Andere Verbindungsarten sind möglich. Dieser so genannte Presssitz gewährleistet eine kraft- und formschlüssige Verbindung des Sockelelements mit dem Anschlusselement. Diese Verbindung sorgt für eine optimale thermische Verbindung der Detektoreinrichtung mit dem Anschlusselement und damit für eine optimale thermische Ableitung der bei einem Stromfluss entstehenden Wärme.

Dadurch, dass das Halbleiterelement direkt mit dem Sockelelement und das Sockelelement wiederum durch den Presssitz kraft- und formschlüssig mit dem Anschlusselement verbunden ist, kann die thermische Wärme optimal abgeleitet werden. Eine hervorragende thermische Verbindung von dem Halbleiterelement nach Außen ist gewährleistet.

Das zweite Anschlusselement weist zumindest eine zu der Form des Mittelelements korrespondierende Aufnahme und zumindest eine zur Form des Kopfelements in der Aufnahme angeordnete korrespondierende Öffnung auf. Die Aufnahme kann hierbei die Form eines Topfes haben, dessen Tiefe relativ zur Tiefe der Öffnung gering ist und der Höhe des Mittelelements entsprechen kann. Das Kopfelement kann eine großflächige Verbindung zu dem zweiten Anschlusselement aufweisen. Eine gute thermische Ableitung ist gegeben.

Wie weiter oben bereits erwähnt, kann die Isolationsschicht auf das zweite Anschlusselement, aber ebenso auf das erste Anschlusselement geklebt werden. Die beiden Anschlusselemente werden dann zusammengefügt. Es ergibt sich eine zumindest formschlüssige Verbindung. Die Herstellung der Verbindung erfolgt beispielsweise durch Verkleben. Etwaige zu lange Kopfelemente können gekürzt oder umgebogen und dann mit dem zweiten Anschlusselement für eine zumindest stoffschlüssig Verbindung verlötet oder verschweißt werden.

Insbesondere mittels des so genannten Reflow-Lötens kann eine hervorragende thermische Verbindung zwischen Kopf- und zweitem Anschlusselement hergestellt werden. Hierbei wird Lotpaste an den gekürzten Enden der Kopfelemente aufgebracht. Das gesamte Werkstück wird dann in einem Ofen erwärmt, so dass sich die Lotpaste verflüssigt. Die flüssige Lotpaste zieht sich in den Zwischenraum zwischen Kopf- und Anschlusselement. Wenn das Werkstück abgekühlt ist, ist eine optimale kraft-, form- und stoffschlüssige Verbindung zwischen dem Kopfelement und dem Anschlusselement hergestellt und damit besteht eine gute thermische Verbindung. Hinzugefügt sei, dass der Schmelzpunkt der Lotpaste über der durch einen Stromfluss hervorgerufenen thermischen Erwärmung liegt, so dass beim Löten das Halbleiterbauelement in der Detektoreinrichtung nicht zerstört wird. Darüber hinaus ist eine kostengünstige Herstellung möglich.

Gemäß eines weiteren Ausführungsbeispiels weisen die Anschlusselemente Anschlussstücke auf. Diese dienen einer einfachen Verbindungsmöglichkeit mit, zum Beispiel, Verbindungselementen oder der Fahrzeugkarosserie. Beispielsweise können Leitungen in einfacher Weise mit den Anschlussstücken vernietet werden. Anschlussstück und Anschlusselement können einstückig geformt sein. Die Anschlussstücke können auch Kabelschuhe oder Anschlussbolzen aufweisen.

Die anmeldungsgemäße Verpolschutzeinrichtung kann in einem wasserdichten Gehäuse im Motorraum untergebracht sein. Dieses Gehäuse kann beispielsweise eine kastenförmige Form haben. Ein wasserdichtes Gehäuse kann in einfacher und kostengünstiger Weise beispielsweise durch Umspritzung der Verpolschutzeinrichtung hergestellt werden.

Ein weiterer Gegenstand der Anmeldung ist ein Fremdstartstützpunkt, der die anmeldungsgemäße Verpolschutzeinrichtung umfasst. Durch eine Integration der Verpolschutzeinrichtung in den Fremdstartstützpunkt kann die Konstruktion kleinbauend und kompakt erfolgen.

Gemäß eines weiteren Ausführungsbeispiels umfasst der Fremdstartstützpunkt eine positive Anschlussklemme, eine negative Anschlussklemme und einen Energiespeicheranschluss. Durch diese kompakte Konstruktion ist es möglich, bei einem Fremdstart die negative Klemme des Starthilfekabels an die negative Anschlussklemme des Fremdstartstützpunkts zu klemmen. Ein aufwendiges Suchen nach einem Anbringungspunkt der negativen Klemme des Starthilfekabels im Motorraum kann entfallen. Ein Einbau der kompakten Vorrichtung gestaltet sich zudem einfach.

Ein weiterer Aspekt der Anmeldung ist ein Verfahren zum Schützen eines Kraftfahrzeugbordnetzes vor einer Verpolung, insbesondere mit einer anmeldungsgemäßen Verpolschutzeinrichtung. Bei dem Verfahren wird ein erstes elektrisches Anschlusselement mit einem Versorgungsstützpunkt verbunden und ein zweites Anschlusselement elektrisch mit dem Potential der Fahrzeugkarosserie verbunden. Im Falle einer Verpolung fließt ein Strom vom ersten Anschlusselement über eine Detektoreinrichtung zum zweiten Anschlusselement. Ferner wird eine Isolationsschicht zwischen den Anschlusselementen angeordnet. Darüber hinaus wird eine Detektoreinrichtung zumindest formschlüssig in zumindest einer Aufnahme der Anschlusselemente angeordnet.

Unabhängig von den hier beschriebenen Ausführungsformen zeichnet sich die Anmeldung dadurch aus, dass sie im Falle einer Verpolung einen Dauerstrom durch die Detektoreinrichtung erlaubt. Der Dauerstrom zerstört die Detektoreinrichtung ausreichend lange nicht. Im normalen Fahrbetrieb des Fahrzeugs wird hingegen ein Stromfluss durch die Detektoreinrichtung verhindert. Dies ist ebenso bei einem korrekten Ladungsvorgang der Fall.

Der Generator eines Kraftfahrzeugs entfällt insbesondere bei einem Hybrid- oder Elektroantrieb. Hierdurch entfallen Gleichrichter-Dioden-Schaltungen, beispielsweise B6 oder B12, welche herkömmlicherweise für einen Verpolschutz sorgen. Somit werden aber getrennte Verpolschutzeinrichtungen notwendig, um einen sicheren Schutz der Verbraucher in einem KFZ vor Verpolungen zu gewährleisten.

Nachfolgen wird die Anmeldung anhand von Ausführungsbeispiele zeigenden Zeichnungen näher erläutert. Es zeigen:
- Fig.1a: eine schematische Schnittansicht eines ersten Ausführungsbeispiels einer Detektoreinrichtung,
- Fig.1b: eine schematische Draufsicht des ersten Ausführungsbeispiels der Detektoreinrichtung,
- Fig.2: eine schematische Ansicht eines ersten Ausführungsbeispiels der Anschlusselemente und der Isolationsschicht,
- Fig.3: eine schematische Ansicht eines zweiten Ausführungsbeispiels der Anschlusselemente und der Isolationsschicht,
- Fig.4: eine schematischen Schnittansicht eines ersten Ausführungsbeispiels einer Verpolschutzeinrichtung,
- Fig.5: eine Schaltungsanordnung einer Verpolschutzeinrichtung,
- Fig.6: eine vereinfachte Schnittansicht eines ersten Ausführungsbeispiels eines Fremdstartstützpunkts mit integrierter Verpolschutzeinrichtung,
- Fig.7: ein Strom/Zeit/Temperatur Diagramm.

Die Zeichnungen zeigen eine insbesondere kostengünstige Konstruktion der anmeldungsgemäßen Verpolschutzeinrichtung, die einen mehr als ausreichenden Schutz der Verbraucher eines Bordnetzes gewährleistet.

Wo es möglich war, wurde in den Zeichnungen für gleiche Elemente die gleichen Bezugszeichen verwendet.

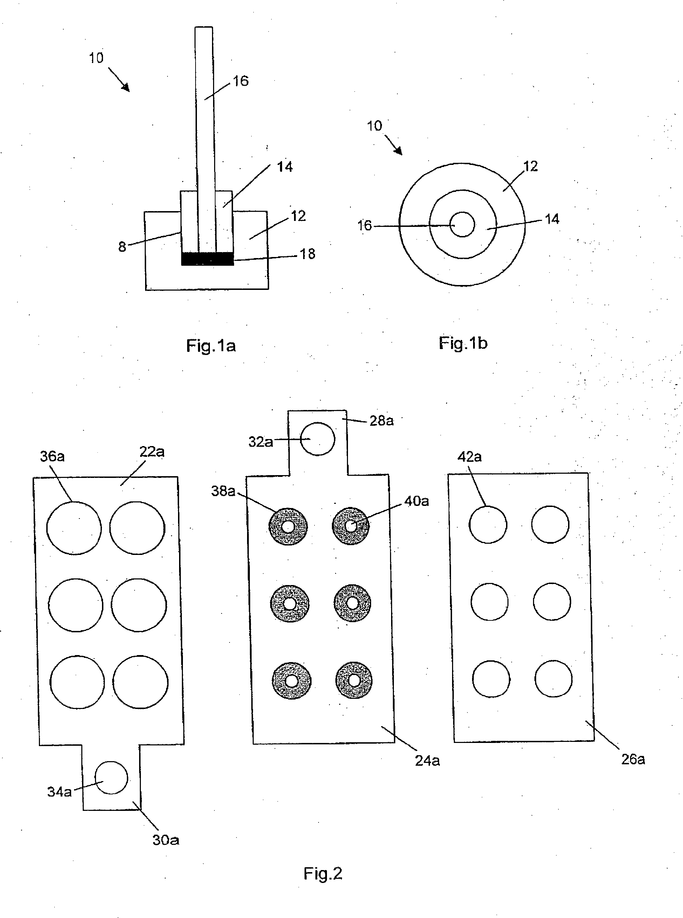

Die Figur 1a zeigt eine vereinfachte Schnittansicht eines ersten Ausführungsbeispiels einer Detektoreinrichtung 10, beispielsweise einer Leistungszenerdiode, im Folgenden auch einfach mit Diode bezeichnet. Die Detektoreinrichtung 10 weist ein Sockelelement 12 mit einer Aufnahme 8 auf. Die Aufnahme 8 besitzt die Form eines Topfes, wobei andere Formen denkbar sind. Am Boden des Topfes ist ein Halbleiterelement 18 angeordnet. Wie aus der Figur 1 hervorgeht, ist das Halbleiterelement 18 direkt mit dem Sockelelement 12 verbunden. Das Halbleiterelement 18 kann aus Silizium sein. Es kann einen pn-Übergang als Sperrschicht aufweisen. Das Sockelelement 12 kann aus einem Buntmetall, vorzugsweise Kupfer oder anderer Nichteisenmetalle, gebildet sein. Jedoch sind auch andere Materialen für diese Elemente 12, 18 verwendbar.

Wiederum direkt auf dem Halbleiterelement 18 angebracht ist ein aus elektrisch leitendem Material hergestelltes Kopfelement 16. Das Kopfelement 16 weist ausschließlich über das Halbleiterelement 18 eine elektrische Verbindung zum Sockelelement 12 auf. Zur Isolation ist ein Mittelelement 14 aus elektrisch nicht leitendem Material zwischen Kopf- 16 und Sockelelement 12 angeordnet. Die in Figur 1a gezeigte äußere Form ist stufenförmig.

In der Figur 1b ist eine schematische Draufsicht der Detektoreinrichtung 10 abgebildet. Es ist zu erkennen, dass sowohl Sockelelement 12, als auch Mittelelement 14 und Kopfelement 16 eine kreisförmige Form aufweisen. Andere Formen sind ebenso denkbar, jedoch ist die abgebildete Form der Detektoreinrichtung 10 besonders geeignet, die Detektoreinrichtung 10 in die Verpolschutzeinrichtung 50 zu installieren.

Die Figur 2 zeigt eine schematische Ansicht eines ersten Ausführungsbeispiels eines ersten Anschlusselements 22a, eines zweiten Anschlusselements 24a und einer Isolationsschicht 26a. Alle drei Elemente 22a, 24a, 26a weisen die gleiche rechteckförmige Grundform auf. Andere Formen der drei Elemente 22a, 24a, 26a sind auch vorstellbar. Das erste Anschlusselement 22a und das zweite Anschlusselement 24a weisen zusätzlich jeweils ein Anschlussstück 30a, 28a mit jeweils einer runden Öffnungen 34a, 32a zur Aufnahme von nicht dargestellten Verbindungsleitungen auf. Andere Anschlussstücke sind möglich.

Das abgebildete Ausführungsbeispiel dient der Aufnahme einer Detektoreinrichtung 10, die beispielsweise sechs Dioden 10 umfasst. Deutlich wird dies durch die jeweils sechs Bohrungen 36a, 40a, 42a zur Aufnahme jeweils einer Diode 10. Andere Aufnahmen 36a, 40a, 42a sind auch denkbar. Die Bohrungen 36a des ersten Anschlusselements 22a korrespondieren mit der Form der Sockelelemente 12. Ebenso verhält es sich mit den Bohrungen 40a des zweiten Anschlusselements 24a und den Kopfelementen 16. Zusätzlich weist das zweite Anschlusselement 24a zu der Form der Mittelelemente 14 korrespondierende Aufnahmen 38a auf. Der Durchmesser der Bohrungen 42a der Isolationsfolie 26a entspricht dem Durchmesser der Aufnahmen 38a. Die Bohrungen 36a können Sacklöcher sein.

Die Aufnahmen 38a können ebenfalls Sacklöcher sein. Die Bohrungen 42a und 40a sind Durchgangsbohrungen.

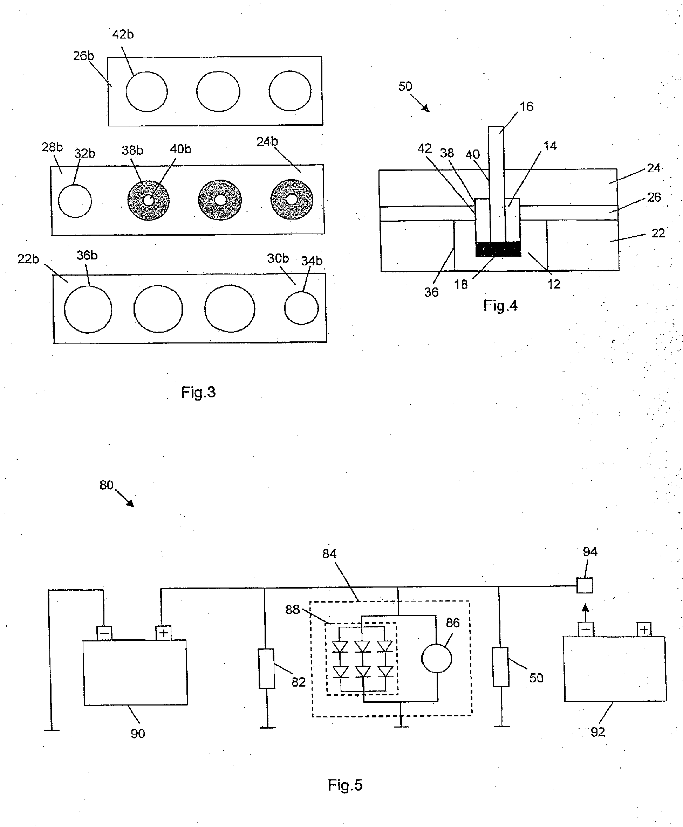

Die Figur 3 zeigt eine schematische Ansicht eines zweiten Ausführungsbeispiels des ersten Anschlusselements 22b, des zweiten Anschlusselements 24b und der Isolationsschicht 26b. Der wesentliche Unterschied des Ausführungsbeispiels gemäß Figur 3 zu dem in Figur 2 gezeigten Beispiel besteht darin, dass eine Detektoreinrichtung 10 mit nur drei Dioden 10 eingesetzt wird. Dadurch ist eine signifikante Miniatisierung möglich.

In Figur 4 ist eine vereinfachte schematische Schnittansicht einer Verpolschutzeinrichtung 50 abgebildet. Zu Gunsten einer besseren Veranschaulichung ist in der Verpolschutzeinrichtung 50 nur eine Detektoreinrichtung 10 abgebildet. Aus demselben Grund sind auch keine Anschlussstücke 28, 30 dargestellt.

Über dem ersten Anschlusselement 22 ist eine als Isolationsschicht 26 angebrachte Isolationsfolie 26 und darauf wiederum das zweite Anschlusselement 24 angeordnet. Ferner ist die Bohrung 36 des ersten Anschlusselements 22 und die Aufnahme 38 sowie die Bohrung 40 des zweiten Anschlusselements 24 dargestellt. Ebenso abgebildet ist die Öffnung 42 der Isolationsfolie 26. Weiterhin gezeigt ist die Detektoreinrichtung 10 mit Sockelelement 12, Halbleiterelement 18, Mittelelement 14 und Kopfelement 16. Die Detektoreinrichtung 10 ist zumindest formschlüssig mit den beiden Anschlusselementen 22, 24 und der Isolationsschicht 26 verbunden. Das erste Anschlusselement 22 kann, wie in der Figur 4 gezeigt, dicker als das zweite Anschlusselement 24 sein, um eine optimale Ableitung der thermischen Wärme vom Sockelelement 12 durch eine große Verbindungsfläche des Sockelelements 12 mit dem Anschlusselement 22 zu bewirken.

Die Konstruktion der Verpolschutzeinrichtung 50 gemäß den Figuren 1a bis 4 wird im Folgenden näher erläutert.

Zunächst werden die beiden Anschlusselemente 22, 24 hergestellt. Vorzugsweise werden die Anschlusselemente 22, 24 samt den Anschlussstücken 28, 30 einstückig hergestellt. Die Öffnungen 36, 40, beziehungsweise die Aufnahme 38 können der Form der Detektoreinrichtung 10 entsprechend hergestellt werden.

Im nächsten Schritt wird das Sockelelement 12 in die Bohrung 36 des ersten Anschlusselements 22 eingebracht. Um eine optimalen Wärmefluss vom Sockelelement 12 zum Anschlusselement 22 zu erzielen, kann beispielsweise eine Pressverbindung hergestellt werden. Hierbei wird das Sockelelement 12 in die Bohrung 36 eingepresst, so dass eine kraft- und formschlüssige Verbindung entsteht.

Zeitgleich kann die Isolationsfolie 26 auf das zweite Anschlusselement 24 aufgebracht werden. Dies kann beispielsweise durch Verkleben oder Ausspritzung erfolgen.

Dann werden obige konstruierte Bauteile zu einem Bauteil zusammengefügt. Dies kann ebenfalls durch Verkleben der Isolationsschicht 26 mit dem ersten Anschlusselement 22 erfolgen. Der überstehende Teil des Kopfelements 16 kann anschließend gekürzt oder auch umgebogen werden.

In der Figur 4 nicht dargestellt ist, dass zwischen dem Kopfelement 16 und dem zweiten Anschlusselement 24 zunächst ein geringer Zwischenraum verbleibt. Eine formschlüssige Verbindung ist bisher noch nicht hergestellt. Das Kopfelement 16 kann aus diesem Grund mit dem zweiten Anschlusselement 24 verlötet oder verschweißt werden.

Insbesondere das Reflow-Löten gewährleistet eine vollständige stoffschlüssige Verbindung mit einer optimalen thermischen Wärmeleitfähigkeit. Zunächst wird Lotpaste auf die Kopfelemente 16 aufgebracht. Dann wird das Werkstück in einem Ofen erhitzt. Im Allgemeinen können eine Vielzahl von Werkstücken gleichzeitig im dem Ofen erhitzt werden. Die flüssige Lotpaste zieht sich in den Zwischenraum zwischen Kopfelement 16 und zweiten Anschlusselement 24. Durch eine folgende Abkühlung der Verpolschutzeinrichtung 50 erstarrt die Lotpaste und bewirkt eine stoffschlüssige und damit einhergehende optimale thermische Verbindung des Kopfelements 16 mit dem Anschlusselement 24.

Im einem nächsten Schritt kann die Verpolschutzeinrichtung 50 wasserdicht umspritzt werden oder in einem wasserdichten Gehäuse angeordnet werden. Dann können nicht dargestellte Verbindungsleitungen an die Anschlussstücke 28, 30, zum Beispiel durch Vernieten, angebracht werden.

Die hergestellte Konstruktion ist kompakt und kleinbauend und gewährleistet darüber hinaus eine hervorragende Wärmeableitung.

In der Figur 5 ist eine vereinfachte Schaltungsanordnung 80 eines Kraftfahrzeugs ohne Elektroantrieb abgebildet. Bei einem Fahrzeug mit Elektroantrieb ergebe sich für den Verpolschutz als wesentlicher Unterschied, dass der Generator 84 nicht direkt an der Bordnetzbatterie 90 angeordnet wäre. Es wären weitere Bauteile vorhanden, wie beispielsweise Hochvoltbatterie oder Gleichspannungswandler. Aus Gründer der Übersichtlichkeit wurde auf solch eine Darstellung verzichtet.

Die Schaltungsanordnung 80 zeigt eine Fahrzeugbatterie 90, deren negativer Pol mit der Fahrzeugkarosserie verbunden ist. Hier verdeutlicht durch einen Masseanschluss.

Ferner ist der positive Pol der Batterie 90 mit einem Bordnetz 82, der anmeldungsgemäßen Verpolschutzeinrichtung 50 und einem Versorgungsstützpunkt 94, beispielsweise einem Fremdstartstützpunkt 94, verbunden. Parallel zum Bordnetz 82 und zur Verpolschutzeinrichtung 50 kann ein Generator 84 geschaltet sein. Der Generator 84 umfasst unter anderem eine angedeutete B6-Gleichrichter-Dioden Schaltung 88 und einen Anlasser 86. Dieser Generator 84 ist jedoch bei Antrieben wie einem Elektro- oder einem Hybridantrieb zwischen anderen Bauelementen angeordnet. Schließlich ist noch eine Fremdbatterie 92 abgebildet, wobei in der Zeichnung eine Verpolung angedeutet ist.

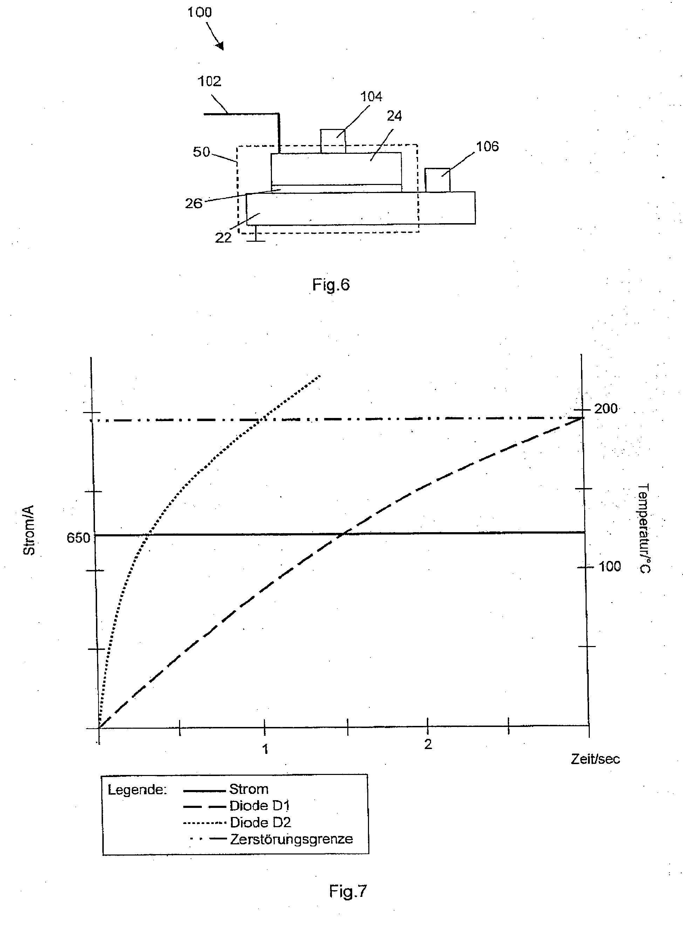

In dem in der Figur 6 gezeigten Fremdstartstützpunkt 100 ist die anmeldungsgemäße Verpolschutzeinrichtung 50 integriert. Nicht in der Figur 6 dargestellt ist zu Gunsten einer besseren Übersicht die Detektoreinrichtung 10. Die Verpolschutzeinrichtung 50 umfasst die bekannten Bauteile erstes und zweites Anschlusselement 22, 24 sowie die Isolationsfolie 26. Während das zweite Anschlusselement 24 mit der Fahrzeugkarosserie, durch den Masseanschluss verdeutlicht, verbunden ist, besitzt das erste Anschlusselement 22 einen Energiespeicheranschluss 102.

Darüber hinaus sind zwei Anschlussklemmen 104, 106 zum einfachen Anschließen eines Starthilfekabels angeordnet, eine positive Anschlussklemme 104 und eine negative Anschlussklemme 106. Dieser Fremdstartstützpunkt 100 mit integrierter Verpolschutzeinrichtung 50 gewährleistet einen einfachen Einbau und eine erleichterte Fremdstarthilfe.

Schließlich zeigt Figur 7 beispielhaft Testverläufe von einer Diode D1 ohne anmeldungsgemäßer Verpolschutzeinrichtung 50 und von einer Diode D2 gleicher Bauart mit einer anmeldumgsgemäßen Verpolschutzeinrichtung 50. Aufgetragen sind die Temperatur/Zeit-Kennlinien der beiden Dioden D1, D2 für einen Strom von 650 A. Aus der Figur 7 kann man entnehmen, dass die Temperatur der Diode D1 erheblich schneller steigt und die thermische Zerstörungsgrenze der Diode erreicht wird, als bei der Diode D2. Die Mindestanforderungen, einen Strom von 650 A zumindest 2 Sekunden zu tragen, werden von der Diode D2 ohne Probleme erfüllt. In diesem Beispiel ist sogar ein Dauerstrom von 3 Sekunden möglich. Die Diode D1 hingegen erreicht die Zerstörungsgrenze bereits nach ca. 1 Sekunde.

Abschließend wird die Funktionsweise der Verpolschutzeinrichtung 50 gemäß den Figuren 1a bis 7 im Folgenden näher erläutert:

Als Detektoreinrichtung 10 wird in diesem Beispiel im Folgenden eine Leistungszenerdiode 10 verwendet. Für den Fall, dass die Fremdbatterie 92 korrekt für einen Fremdstart oder Ladevorgang angeschlossen ist, ist der Strompfad über die Verpolschutzeinrichtung 50 gesperrt. Lediglich ein Leckstrom zwischen 20 und 100 µA kann pro eingesetzte Diode 10 fließen. Im Fahrbetrieb fließt ebenfalls kein Strom bis auf dem Leckstrom über die Verpolschutzeinrichtung 50 durch die Detektoreinrichtung 10.

Bei einer Verpolung, wenn beispielsweise, wie in Figur 5 angedeutet, der negative Pol der Fremdbatterie 92 an den Fremdstartstützpunkt 94 angeschlossen wird, liegt ein negatives Potential an dem Fremdstartstützpunkt 94 im Vergleich zu dem Potential der Fahrzeugkarosserie an. Mit anderen Worten, die zumindest eine Diode 10 der Verpolschutzeinrichtung 50 wird in Durchlassrichtung betrieben. Ein eingekoppelter Strom, der abhängig vom Ladezustand der Batterie 650 A und mehr betragen kann, fließt unmittelbar über die Verpolschutzeinrichtung 50. Nur ein geringer Teil fließt über die übrigen Komponenten, wie Bordnetz 82 oder einem möglichen Generator 84. Ein sicherer Schutz des angeschlossenen Bordnetzes 82 wird gewährleistet.

Schließlich wird an dieser Stelle noch kurz der Fall betrachtet, dass zwar der korrekte Pol einer Fremdbatterie 92 an den Fremdstartstützpunkt 94 angeschlossen wird, jedoch die Fremdbatterie 92 eine zu hohe Spannung aufweist, die zu Beschädigungen des Bordnetzes 82 führen kann. Beispielsweise tritt dieser Fall ein, wenn eine PKW-Batterie, die im Allgemeinen eine Spannung von 12 V aufweist, mit einer LKW-Batterie, die im Allgemeinen 24 V aufweist, geladen wird. Die Detektoreinrichtung 10 weist Leistungszenerdioden 10 auf, deren Durchbruchspannung 20 V in diesem Beispiel betragen kann. Für diesen Fall bedeutet dies, dass die Leistungszenerdioden 10, da die anliegende Spannung 24 V beträgt, leitend werden und das Bordnetz 82 sicher geschützt wird.

Durch die beschriebene Konstruktion einer Verpolschutzeinrichtung erhält man den gewünschten sicheren Schutz von Verbrauchern gegen Verpolung oder zu hohen Spannungswerten bei einer gleichzeitig kostengünstigen Herstellung und entfallenden Reparaturkosten. Darüber hinaus ist eine kompakte Bauweise gewährleistet und vorhandene Komponenten müssen nicht verändert werden.

Es versteht sich von selbst, dass die beschriebenen Ausführungsbeispiele nur wenige aus einer Vielzahl von möglichen Ausführungsbeispielen sind. Beispielsweise ist in dem dargestellten Ausführungsbeispiel aus Gründen der Übersichtlichkeit als Detektoreinrichtung lediglich eine Leistungszenerdiode abgebildet. Eine Detektoreinrichtung kann auch mehrere Dioden, die auch zumindest teilweise in Reihe geschaltet sein können, oder andere Halbleiterbauelemente, sowie weitere Bauelemente umfassen. Ferner kann die dargestellte Detektoreinrichtung andere Bauformen aufweisen.

## Patentansprüche

1. Verpolschutzeinrichtung (50) für Kraftfahrzeuge mit einer Detektoreinrichtung (10),
einem ersten mit einem Versorgungsstützpunkt (94) elektrisch verbundenem Anschlusselement (22),
einem zweiten elektrisch auf dem Potential der Fahrzeugkarosserie liegenden Anschlusselement (24), wobei im Falle einer Verpolung das erste Anschlusselement (22) mit dem zweiten Anschlusselement (24) über die Detektoreinrichtung (10) elektrisch verbunden ist, und
wobei eine Isolationsschicht (26) zwischen dem ersten Anschlusselement (22) und dem zweiten Anschlusselement (24) angeordnet ist,
**dadurch gekennzeichnet,**
**dass** die Anschlusselemente (22, 24) jeweils zumindest eine Aufnahme (36, 38) aufweisen, und dass die Detektoreinrichtung (10) zumindest formschlüssig in zumindest einer Aufnahme (36, 38) angeordnet ist.

2. Verpolschutzeinrichtung (50) nach Anspruch 1,
**dadurch gekennzeichnet, dass** zumindest ein Anschlusselement (22, 24) aus einem eine hohe Wärmeleitfähigkeit aufweisendem Stoff hergestellt ist.

3. Verpolschutzeinrichtung (50) nach einem der zuvor genannten Ansprüche, **dadurch gekennzeichnet, dass** die Detektoreinrichtung (10) derart gebildet ist, dass sie zerstörungsfrei zumindest für 2 Sekunden einen Strom von zumindest 650 A trägt.

4. Verpolschutzeinrichtung (50) nach einem der zuvor genannten Ansprüche, **dadurch gekennzeichnet, dass** die Detektoreinrichtung (10) zumindest eine Diode (10) aufweist.

5. Verpolschutzeinrichtung (50) nach einem der zuvor genannten Ansprüche, **dadurch gekennzeichnet, dass** zumindest zwei der Dioden (10) parallel zueinander geschaltet sind.

6. Verpolschutzeinrichtung (50) nach einem der zuvor genannten Anspruche, **dadurch gekennzeichnet, dass** die Diode (10) eine Leistungszenerdiode (10) ist.

7. Verpolschutzeinrichtung (50) nach einem der zuvor genannten Ansprüche, **dadurch gekennzeichnet, dass** die Detektoreinrichtung (10) ein Sockelelement (12), ein auf dem Sockelelement (12) angeordnetes Mittelelement (14) und ein auf dem Mittelelement (14) angeordnetes Knopfelement (16) aufweist.

8. Verpolschutzeinrichtung (50) nach einem der zuvor genannten Ansprüche, **dadurch gekennzeichnet, dass** das Sockelelement (12) eine Aufnahme (8) aufweist.

9. Verpolschutzeinrichtung (50) nach einem der zuvor genannten Ansprüche, **dadurch gekennzeichnet, dass** ein Halbleiterelement (18) direkt in der Aufnahme (8) des Sockelelements (12) angebracht ist.

10. Verpolschutzeinrichtung (50) nach einem der zuvor genannten Ansprüche, **dadurch gekennzeichnet, dass** das Kopfelement (16) direkt mit dem Halbleiterelement (18) verbunden ist.

11. Verpolschutzeinrichtung (50) nach einem der zuvor genannten Ansprüche, **dadurch gekennzeichnet, dass** das Kopfelement (16) gegenüber dem Sockelelement (12) durch das Mittelelement (14) elektrisch isoliert ist.

12. Verpolschutzeinrichtung (50) nach einem der zuvor genannten Ansprüche, **dadurch gekennzeichnet, dass** das erste Anschlusselement (22) zumindest eine Öffnung (36) zur Aufnahme der Detektoreinrichtung (10) aufweist.

13. Verpolschutzeinrichtung (50) nach einem der zuvor genannten Ansprüche, **dadurch gekennzeichnet, dass** das Sockelelement (12) der Detektoreinrichtung (10) eine zu der Öffnung (36) korrespondierende Form aufweist derart, dass das Sockelelement (12) form- und/oder kraftschlüssig in der Öffnung (36) angeordnet ist.

14. Verpolschutzeinrichtung (50) nach einem der zuvor genannten Ansprüche, **dadurch gekennzeichnet, dass** das zweite Anschlusselement (24) zumindest eine zu der Form des Mittelelements (14) der Detektoreinrichtung (10) korrespondierende Aufnahme aufweist.

15. Verpolschutzeinrichtung (50) nach einem der zuvor genannten Ansprüche, **dadurch gekennzeichnet, dass** die Aufnahme des zweiten Anschlusselements (24) zumindest eine zu der Form des Kopfelements (16) der Detektoreinrichtung (10) korrespondierende Öffnung (40) aufweist.

16. Verpolschutzeinrichtung (50) nach einem der zuvor genannten Anspruche, **dadurch gekennzeichnet, dass** die Isolationsschicht (26) zumindest eine zu der Form des Mittelelements (14) der Detektoreinrichtung (10) korrespondierende Öffnung (42) aufweist.

17. Verpolschutzeinrichtung (50) nach einem der zuvor genannten Ansprüche, **dadurch gekennzeichnet, dass** das Knopfelement (12) der Detektoreinrichtung (10) mit dem zweiten Anschlusselement (24) verlötet oder verschweißt ist.

18. Verpolschutzeinrichtung (50) nach einem der zuvor genannten Ansprüche, **dadurch gekennzeichnet, dass** die Anschlusselemente (22, 24) Anschlussstücke (30, 32) aufweisen.

19. Verpolschutzeinrichtung (50) nach einem der zuvor genannten Ansprüche, **dadurch gekennzeichnet, dass** ein Gehäuse die Verpolschutzeinrichtung (50) wasserdicht umgibt.

20. Versorgungsstützpunkt (100) umfassend eine Verpolschutzeinrichtung (50) Anspruch 1.

21. Versorgungsstützpunkt (100) nach Anspruch 19,
**dadurch gekennzeichnet, dass** der versorgungsstützpunkt (100) eine positive Anschlussklemme (104), eine negative Anschlussklemme (106) und einen Energiespeicheranschluss (102) aufweist.

22. Verfahren zum Schützen eines Kraftfahrzeugbordnetzes (82) vor einer Verpolung,
insbesondere mit einer Verpolschutzeinrichtung (50) nach einem der Ansprüche 1 bis 18,
bei dem ein erstes elektrisches Anschlusselement (22) mit einem Versorgungsstützpunkt (94, 100) verbunden wird,
bei dem ein zweites Anschlusselement (24) elektrische mit dem Potential der Fahrzeugkarosserie verbunden wird,
bei dem im Falle einer Verpolung ein Strom vom ersten Anschlusselement (22) über eine Detektoreinrichtung (10) zum zweiten Anschlusselement (24) fließt, wobei
eine Isolationsschicht (26) zwischen den Anschlusselementen (22, 24) angeordnet wird, und die Detektoreinrichtung (10) zumindest formschlüssig in zumindest einer Aufnahme (36, 38) der Anschlusselemente (22, 24) angeordnet wird.

## Claims

1. A polarity reversal protection device (50) for motor vehicles, with
a detection device (10),
a first connection element (22) electrically connected to a supply tap (94),
a second connection device (24) having the electrical potential of the vehicle frame,
wherein in the case of a polarity reversal, the first connection element (22) is electrically connected to the second connection element (24) via the detection device (10), wherein
an insulating layer (26) is arranged between the first connection element (22) and the second connection element (24),
**characterized in**
**that** each of the connection elements (22, 24) has at least one receptacle (36, 38), and
**that** the detection device (10) is at least positively engaged in at least one receptacle (36, 38).

2. The polarity reversal protection device (50) of claim 1, **characterised in that** at least one connection element (22, 24) is made from a material having a high thermal conductivity.

3. The polarity reversal protection device (50) of any one of the preceding claims, **characterised in that** the detection device (10) is formed in such a way that it carries a current of at least 650 A for a minimum of 2 seconds without being destroyed.

4. The polarity reversal protection device (50) of any one of the preceding claims, **characterised in that** the detection device (10) has at least one diode (10).

5. The polarity reversal protection device (50) of any one of the preceding claims, **characterised in that** at least two of the diodes (10) are connected in parallel to each other.

6. The polarity reversal protection device (50) of any one of the preceding claims, **characterised in that** the diode (10) is a power Zener diode (10).

7. The polarity reversal protection device (50) of any one of the preceding claims, **characterised in that** the detection device (10) has a base element (12), a central element (14) positioned on the base element (12) and a head element (16) positioned on the central element (14).

8. The polarity reversal protection device (50) of any one of the preceding claims, **characterised in that** the base element (12) has a receptacle (8).

9. The polarity reversal protection device (50) of any one of the preceding claims, **characterised in that** a semiconductor element (18) is directly arranged in the receptacle (8) of the base element (12).

10. The polarity reversal protection device (50) of any one of the preceding claims, **characterised in that** the head element (16) is directly connected to the semiconductor element (18).

11. The polarity reversal protection device (50) of any one of the preceding claims, **characterised in that** the head element (16) is electrically insulated from the base element (12) by the central element (14).

12. The polarity reversal protection device (50) of any one of the preceding claims, **characterised in that** the first connection element (22) has at least one opening (36) for receiving the detection device (10).

13. The polarity reversal protection device (50) of any one of the preceding claims, **characterised in that** the base element (12) of the detector device (10) has a shape corresponding to that of the opening (36), so that the base element (12) is positively engaged and/or force-fit positioned in the opening (36).

14. The polarity reversal protection device (50) of any one of the preceding claims, **characterised in that** the second connection element (24) has at least one receptacle corresponding to the shape of the central element (14) of the detection device (10).

15. The polarity reversal protection device (50) of any one of the preceding claims, **characterised in that** the receptacle of the second connection element (24) has at least one opening (40) corresponding to the shape of the head element (16) of the detection device (10).

16. The polarity reversal protection device (50) of any one of the preceding claims, **characterised in that** the insulating layer (26) has at least one opening (42) corresponding to the shape of the central element (14) of the detection device (10).

17. The polarity reversal protection device (50) of any one of the preceding claims, **characterised in that** the head element (12) of the detection device (10) is soldered or welded to the second connection element (24).

18. The polarity reversal protection device (50) of any one of the preceding claims, **characterised in that** the connection elements (22, 24) have connection pieces (30, 32).

19. The polarity reversal protection device (50) of any one of the preceding claims, **characterised in that** a housing surrounds the polarity reversal protection device (50) in a watertight manner.

20. A supply tap (100) comprising a polarity reversal protection device (50) of claim 1.

21. The supply tap (100) as claimed in claim 19, **characterised in that** the supply tap (100) has a positive connection terminal (104), a negative connection terminal (106) and an energy storage connection (102).

22. A method for protecting the vehicle electrical system of a motor vehicle (82) against polarity reversal, in particular including a polarity reversal protection device (50) of any one of Claims 1 to 18,
wherein a first electrical connection element (22) is connected to a supply tap (94, 100),
wherein a second connection element (24) is electrically connected to the potential of the vehicle frame, wherein in the case of a polarity reversal, a current from a first connection element (22) flows via a detection device (10) to the second connection element (24), with an insulating layer (26) being provided between the connection elements (22, 24) and the detection device (10) being at least positively engaged in at least one receptacle (36, 38) of the connection elements (22, 24).

## Revendications

1. Dispositif de protection contre une inversion de polarité (50) pour des véhicules automobiles, comprenant
un dispositif détecteur (10),
un premier élément de connexion (22) connecté électriquement à un point d'aide à l'alimentation (94),
un second élément de connexion (24) se trouvant connecté électriquement au potentiel de la carrosserie d'un véhicule,
où, dans le cas d'une inversion de la polarité, le premier élément de connexion (22) est connecté électriquement au second élément de connexion (24), par le dispositif détecteur (10), et
où une couche isolante (26) est disposée entre le premier élément de connexion (22) et le second élément de connexion (24),
**caractérisé**
**en ce que** les éléments de connexion (22, 24) présentent à chaque fois au moins un logement (36, 38), et
**en ce que** le dispositif détecteur (10) est disposé, au moins par complémentarité de forme, dans au moins un logement (36, 38).

2. Dispositif de protection contre une inversion de polarité (50) selon la revendication 1, **caractérisé en ce qu'**au moins un élément de connexion (22, 24) est fabriqué dans un matériau présentant une conductivité thermique élevée.

3. Dispositif de protection contre une inversion de polarité (50) selon l'une ou l'autre des revendications précédentes, **caractérisé en ce que** le dispositif détecteur (10) est conçu de manière telle, qu'il supporte de façon non destructive, pendant au moins 2 secondes, un courant d'au moins 650 A.

4. Dispositif de protection contre une inversion de polarité (50) selon l'une quelconque des revendications précédentes, **caractérisé en ce que** le dispositif détecteur (10) présente au moins une diode (10).

5. Dispositif de protection contre une inversion de polarité (50) selon l'une quelconque des revendications précédentes, **caractérisé en ce qu'**au moins deux des diodes (10) sont montées en parallèle l'une par rapport à l'autre.

6. Dispositif de protection contre une inversion de polarité (50) selon l'une quelconque des revendications précédentes, **caractérisé en ce que** la diode (10) est une diode Zener de puissance (10).

7. Dispositif de protection contre une inversion de polarité (50) selon l'une quelconque des revendications précédentes, **caractérisé en ce que** le dispositif détecteur (10) présente un élément formant socle (12), un élément central (14) disposé sur l'élément formant socle (12) et un élément de tête (16) disposé sur l'élément central (14).

8. Dispositif de protection contre une inversion de polarité (50) selon l'une quelconque des revendications précédentes, **caractérisé en ce que** l'élément formant socle (12) présente un logement (8).

9. Dispositif de protection contre une inversion de polarité (50) selon l'une quelconque des revendications précédentes, **caractérisé en ce qu'**un élément semi-conducteur (18) est placé directement dans le logement (8) de l'élément formant socle (12).

10. Dispositif de protection contre une inversion de polarité (50) selon l'une quelconque des revendications précédentes, **caractérisé en ce que** l'élément de tête (16) est relié directement à l'élément semi-conducteur (18).

11. Dispositif de protection contre une inversion de polarité (50) selon l'une quelconque des revendications précédentes, **caractérisé en ce que** l'élément de tête (16) est isolé électriquement de l'élément formant socle (12), par l'élément central (14).

12. Dispositif de protection contre une inversion de polarité (50) selon l'une quelconque des revendications précédentes, **caractérisé en ce que** le premier élément de connexion (22) présente au moins une ouverture (36) pour le logement du dispositif détecteur (10).

13. Dispositif de protection contre une inversion de polarité (50) selon l'une quelconque des revendications précédentes, **caractérisé en ce que** l'élément formant socle (12) du dispositif détecteur (10) présente une forme correspondant à l'ouverture (36), de manière telle que l'élément formant socle (12) soit disposé dans l'ouverture (36), par complémentarité de forme et/ou par action de force.

14. Dispositif de protection contre une inversion de polarité (50) selon l'une quelconque des revendications précédentes, **caractérisé en ce que** le second élément de connexion (24) présente au moins un logement correspondant à la forme de l'élément central (14) du dispositif détecteur (10).

15. Dispositif de protection contre une inversion de polarité (50) selon l'une quelconque des revendications précédentes, **caractérisé en ce que** le logement du second élément de connexion (24) présente au moins une ouverture (40) correspondant à la forme de l'élément de tête (16) du dispositif détecteur (10).

16. Dispositif de protection contre une inversion de polarité (50) selon l'une quelconque des revendications précédentes, **caractérisé en ce que** la couche isolante (26) présente au moins une ouverture (42) correspondant à la forme de l'élément central (14) du dispositif détecteur (10).

17. Dispositif de protection contre une inversion de polarité (50) selon l'une quelconque des revendications précédentes, **caractérisé en ce que** l'élément de tête (12) du dispositif détecteur (10) est relié au second élément de connexion (24) par brasage ou par soudage.

18. Dispositif de protection contre une inversion de polarité (50) selon l'une quelconque des revendications précédentes, **caractérisé en ce que** les éléments de connexion (22, 24) présentent des raccords filetés (30, 32).

19. Dispositif de protection contre une inversion de polarité (50) selon l'une quelconque des revendications précédentes, **caractérisé en ce qu'**un carter entoure, de façon étanche à l'eau, le dispositif de protection contre une inversion de polarité (50).

20. Point d'aide à l'alimentation (100) comprenant un dispositif de protection contre une inversion de polarité (50) selon la revendication 1.

21. Point d'aide à l'alimentation (100) selon la revendication 19, **caractérisé en ce que** le point d'aide à l'alimentation (100) présente une borne de connexion positive (104), une borne de connexion négative (106) et un raccordement d'accumulateur d'énergie (102).

22. Procédé de protection d'un réseau de bord (82) d'un véhicule automobile, contre une inversion de polarité,
en particulier comprenant un dispositif de protection contre une inversion de polarité (50) selon l'une quelconque des revendications 1 à 18,
procédé dans lequel un premier élément de connexion électrique (22) est connecté à un point d'aide à l'alimentation (94, 100),
dans lequel un second élément de connexion (24) est connecté électriquement au potentiel de la carrosserie d'un véhicule,
dans lequel, dans le cas d'une inversion de la polarité, un courant passe, allant du premier élément de connexion (22) jusqu'au second élément de connexion (24), via un dispositif détecteur (10), où une couche isolante (26) est disposée entre les éléments de connexion (22, 24), et le dispositif détecteur (10) est disposé, au moins par complémentarité de forme, dans au moins un logement (36, 38) des éléments de connexion (22, 24).
